# EUROPEAN PATENT APPLICATION

(11) **EP 2 555 102 A1**
(43) Date of publication of application: **06.02.2013**
(21) Application number: 11765708.0
(22) Date of filing: 31.03.2011
(51) Int. Cl.: G06F 3/048

(54) **PORTABLE INFORMATION DISPLAY TERMINAL**

(30) Priority: 01.04.2010 JP 2010085433
(71) Applicant: Funai Electric Co., Ltd., Daito-shi Osaka 574-0013 (JP)
(72) Inventor: MASAKI, Yasuo, Daito-shi Osaka 574-0013 (JP); KOHNO, Sei, Daito-shi Osaka 574-0013 (JP)
(74) Representative: Grünecker, Kinkeldey, Stockmair & Schwanhäusser
(86) International application number: PCT/JP2011/058163
(87) International publication number: WO 2011/125808

(57) **Abstract**

Disclosed is a portable information display terminal which can start an application program correspondingly to a use state even if assumed to be used in a placed state. The portable information display terminal (1) comprises: a housing (20); a use state detection means (53) which detects if the terminal is being used in a first use state placed a placing surface (100)or being used in a second use state grasped in a hand; and control portions (51, 151, 251) which, based on the detection result from the use state detection means, determine and specify the use state, and also start a specified application program for the use state.

## Description

### Technical Field

The present invention relates to a portable information display terminal, and more particularly, it relates to a portable information display terminal including a housing.

### Background Technique

A portable information display terminal including a housing is known in general. Such a portable information display terminal is disclosed in Japanese Patent Laying-Open No. 2004-302734, for example.

In Japanese Patent Laying-Open No. 2004-302734, there is disclosed a portable telephone (portable information display terminal) including a housing and a touch sensor consisting of an electrical capacitance type sensor provided on a surface of the housing. This portable telephone according to Patent Document 1 is formed to detect the way the user holds the housing when he/she grasps the housing by the touch sensor and to automatically start an application program corresponding to the way (use state) the user holds the housing on the basis of the way the user holds the housing detected by the touch sensor. Thus, it is possible to automatically start the application program corresponding to the use state of the user.

### Prior Art

Patent Document
Patent Document 1: Japanese Patent Laying-Open No. 2004-302734

### Summary of the Invention

### Problem to be Solved by the Invention

In the portable telephone (portable information display terminal) according to Japanese Patent Laying-Open No. 2004-302734, however, the use state of the portable information display terminal is conceivably undetectable in a case where the housing is not grasped by the user (case where the housing is placed or the like), while it is possible to detect the use state at the time when the user grasps the housing by employing the touch sensor. In a case of applying the structure disclosed in Japanese Patent Laying-Open No. 2004-302734 to a portable information terminal assumed to be used in a placed state, therefore, the use state of the portable information display terminal is undetectable, and hence there is such a problem that the application program cannot be started correspondingly to the use state.

The present invention has been proposed in order to solve the aforementioned problem, and an object of the present invention is to provide a portable information display terminal capable of starting an application program correspondingly to a use state also in a case assumed to be used in a placed state.

### Means for Solving the Problem and Effects of the Invention

A portable information display terminal according to an aspect of the present invention includes a housing, a use state detection means for detecting which use state the portable information terminal is in, i.e. in a first use state where the user uses the portable information display terminal while placing the housing on a placing surface or in a second use state where the user uses the portable information display terminal while manually grasping the housing, and a control portion determining and specifying the use state on the basis of a detection result of the use state detection means and starting an application program corresponding to the specified use state.

As hereinabove described, the portable information display terminal according to the aspect of the present invention is provided with the use state detection means for detecting which use state the portable information terminal is in, i.e. in the first use state where the user uses the portable information display terminal while placing the housing on the placing surface or in the second use state where the user uses the portable information display terminal while manually grasping the housing, whereby the same can detect not only the second use state where the user uses the portable information display terminal while manually grasping the housing but also the first use state where the user uses the portable information display terminal while placing the housing on the placing surface, dissimilarly to a touch sensor detecting the way the user holds the housing. Thus, the use state of the portable information display terminal can be detected also in a case of a portable information display terminal assumed to be used in a placed state. Further, the control portion determines and specifies the use state and starts the application program corresponding to the specified use state on the basis of the detection result of the use state detection means, whereby the same can start the application program corresponding to each not use state of the portable information display terminal not only in the case (second use state) where the housing is grasped by the user but also in the case (first use state) where the portable information display terminal is placed. Thus, the control portion can start the application program correspondingly to the use state also in a case where it is assumed that the portable information display terminal is used in the placed state.

Preferably, the portable information display terminal according to the aforementioned aspect further includes a display portion displaying information, the second use state where the user uses the portable information display terminal while manually grasping the housing includes a laterally oriented use state and a vertically oriented use state, the use state detection means is formed to be also capable of detecting lateral orientation and vertical orientation in addition to the use state, and the control portion is formed to start an application program corresponding to the second use state and to change the orientation of display to be displayed on the display portion in response to the lateral orientation or the vertical orientation in a case of specifying that the portable information terminal is in the second use state. When forming the portable information display terminal in this manner, the display portion can display the information with the orientation of display suitable to each in the case where the user grasps the housing in the vertically oriented use state and the case where the user grasps the housing in the laterally oriented use state.

Preferably, the portable information display terminal according to the aforementioned aspect further includes a display portion displaying information, the first state where the user uses the portable information display terminal while placing the housing on the placing surface includes a vertically placed use state where the user uses the portable information display terminal while standing the housing on the placing surface and a laid-down use state where the user uses the portable information display terminal while laying down the housing on the placing surface, and the control portion is formed to start an application program corresponding to the first use state and to change the orientation of display to be displayed on the display portion in response to the vertically placed use state or the laid-down use state in a case of specifying that the portable information display terminal is in the first use state. When forming the portable information display terminal in this manner, the display portion can display the information in the orientation of display suitable to each in the case where the user uses the portable information display terminal in the vertically placed use state or in the case where the user uses the portable information display terminal in the laid-down state.

Preferably, the portable information display terminal according to the aforementioned aspect is so formed that the user is capable of setting an application program started in response to the use state, and the control portion is formed to start the application program set by the user in response to the use state. When forming the portable information display terminal in this manner, the user previously sets the application program started by the user in response to each use state so that the control portion can automatically start the application program set by the user in a case where the user changes the use state, whereby the control portion can start the application program coinciding with a use mode of the user in each use state.

Preferably in the portable information display terminal according to the aforementioned aspect, the control portion is formed to terminate an application program having been started in a use state before the specified use state and to start the application program corresponding to the specified use state when starting the application program corresponding to the specified use state. When forming the portable information display terminal in this manner, the control portion can normally terminate an unswitched application program and thereafter properly switch this application program to an application program corresponding to change of the use state dissimilarly to a case of unauthorizedly interrupting or forcibly terminating the unswitched application program. As a result of this, the control portion can stably operate each application program run in the portable information display terminal.

Preferably in the portable information display terminal according to the aforementioned aspect, the first use state where the user uses the portable information display terminal while placing the housing on the placing surface includes a vertically placed use state where the user uses the portable information display terminal while standing the housing on the placing surface and a laid-down use state where the user uses the portable information display terminal while laying down the housing on the placing surface, and the control portion is formed to start an application program not premised to be operated by the user in the case of the vertically placed use state and to start an application program premised to be operated by the user in the case of the laid-down use state. In the case of the vertically placed use state where the user uses the portable information display terminal while standing the housing on the placing surface, the control portion can start an application program corresponding to the vertically placed use state, which is a use state unsuitable to be operated by the user, where the housing stands with respect to the placing surface by starting the application program not premised to be operated by the user. Further, the control portion can start an application program corresponding to the laid-down use state, which is a use state where the user is capable of easily operating the portable information display terminal, where the housing lies down on the placing surface by starting the application program premised to be operated by the user in the case of the laid-down use state where the user uses the portable information display terminal while laying down the housing on the placing surface. As a result of these, the control portion can start the application program suitable to each use state in response to the presence or absence of the premise that the user operates the application program in the same placed state.

Preferably, the aforementioned portable information display terminal in which the first use state includes the vertically placed use state and the laid-down used state further includes a communication portion used in a remote control mode, and the control portion is formed to start an application program corresponding to the remote control mode in which a remote control signal is transmittable from the communication portion in a case of specifying that the portable information display terminal is in the laid-down use state on the basis of the detection result by the use state detection means. When forming the portable information display terminal in this manner, the portable information display terminal is automatically switched to the remote control mode when the user simply arranges the portable information display terminal to be in the laid-down use state laying down the housing on the placing surface, whereby the user can easily use the portable information display terminal as a remote control in the laid-down use state without performing an operation of switching the portable information display terminal to the remote control mode.

Preferably, the aforementioned portable information display terminal in which the first use state includes the vertically placed use state and the laid-down used state further includes a display portion displaying information, and the application program not premised to be operated by the user includes an application program so formed that the information displayed on the display portion is browsable in a state where the user does not operate the portable information display terminal. When forming the portable information display terminal in this manner, also when the portable information display terminal is in a use state unsuitable to be positively operated by the user, the control portion can start an application program suitable to such a use state. Therefore, the portable information display terminal can be caused to effectively function also in the use state unsuitable to be positively operated by the user.

Preferably in the aforementioned portable information display terminal in which the first use state includes the vertically placed use state and the laid-down used state, the control portion is formed to start the application program premised to be operated by the user also in a case of specifying that the portable information display terminal is in the second use state in addition to the case of the laid-down use state. When forming the portable information display terminal in this manner, the control portion can start the application program corresponding to the second use state, which is a use state where the user can easily operate the portable information display terminal, where the user uses the portable information display terminal while manually grasping the housing. Also according to this, the portable information display terminal can be caused to effectively function.

Preferably in the aforementioned portable information display terminal in which the first use state includes the vertically placed use state and the laid-down used state, the use state detection means is formed to acquire inclinations of the housing in the vertically placed use state and the laid-down use state in the first use state, and the control portion is formed to be capable of determining and specifying the vertically placed use state and the laid-down use state on the basis of the inclinations of the housing in the vertically placed use state and the laid-down use state acquired by the use state detection means. When forming the portable information display terminal in this manner, the control portion can easily detect the vertically placed use state and the laid-down use state on the basis of the inclination of the housing.

Preferably in this case, the housing has such an outer shape that the housing is placeable with different inclinations in the vertically placed use state and the laid-down use state, and the control portion is formed to be capable of determining and specifying the vertically placed use state and the laid-down use state on the basis of the different inclinations of the housing in the vertically placed use state and the laid-down used state based on the outer shape of the housing acquired by the use state detection means. When forming the portable information display terminal in this manner, the user can bring the portable information display terminal into the vertically placed use state standing the housing and the laid-down uses state laying down the housing due to the outer shape of the housing without an auxiliary tool such as a stand, and the control portion can easily determine and detect the vertically placed use state and the laid-down use state due to the difference between inclinations based on the outer shape.

Preferably in this case, the housing is so formed that the inclination of the housing in the vertically placed use state and the inclination of the housing in the laid-down used state are relatively different from each other by at least 90 degrees, and the control portion is formed to be capable of determining and specifying the vertically placed use state and the laid-down use state on the basis of the inclinations of the housing different from each other by at least 90 degrees in the vertically placed use state and the laid-down used state based on the outer shape of the housing acquired by the use state detection means. When forming the portable information display terminal in this manner, the control portion can reliably determine and specify the vertically placed use state and the laid-down use state due to the difference of at least 90 degrees between the inclinations based on the outer shape of the housing.

Preferably in the portable information display terminal according to the aforementioned aspect, the first use state where the user uses the portable information display terminal while placing the housing on the placing surface includes a vertically placed use state where the user uses the portable information display terminal while standing the housing on the placing surface and a laid-down used state where the user uses the portable information display terminal while laying down the housing on the placing surface, the use state detection means includes an inclination sensor, and the control portion is formed to determine and specify the vertically placed use state and the laid-down use state in the first use state on the basis of an inclination angle detected by the inclination sensor and to determine and specify the second use state where the user uses the portable information display terminal while manually grasping the housing on the basis of a changing state of an inclination value detected by the inclination sensor. When forming the portable information display terminal in this manner, the control portion can easily determine and specify the vertically placed use state and the laid-down use state on the basis of an absolute inclination angle and can determine and specify the second use state where the user uses the portable information display terminal while manually grasping the housing on the basis of the changing state of the inclination value due to the inclination sensor, whereby the same can easily determine and specify the three states, i.e. the vertically placed use state, the laid-down use state and the second use state.

Preferably in this case, the portable information display terminal further includes a storage portion storing the inclination angle detected by the inclination sensor, and the control portion is formed to determine and specify the vertically placed use state and the laid-down use state in the first use state and to determine and specify the second use state where the user uses the portable information display terminal while manually grasping the housing by comparing an inclination angle before a use state stored in the storage portion is changed and an inclination angle after the use state stored in the storage portion is changed with each other. When forming the portable information display terminal in this case, the control portion can reliably determine and specify the use state of the portable information display terminal on the basis of change of the inclination angle before and after the use state is changed.

Preferably in the aforementioned portable information display terminal in which the use state detection means includes the inclination sensor, the control portion is formed to determine and specify the second use state where the user uses the portable information display terminal while manually grasping the housing in a case where the inclination angle detected by the inclination sensor changes with time in a prescribed range and to determine and specify the first use state where the user uses the portable information display terminal while placing the housing on the placing surface in a case where the inclination angle detected by the inclination sensor does not change with time in the prescribed range. When forming the portable information display terminal in this manner, the control portion can more correctly determine and specify the use state of the portable information display terminal by acquiring temporal change of the inclination angle.

Preferably, the portable information display terminal according to the aforementioned aspect is so formed that the user is capable of setting validation or invalidation of a function of starting the application program corresponding to the detected use state, and the control portion is formed to start the application program corresponding to the detected use state in a case where the function of starting the application program corresponding to the use state is valid. When forming the portable information display terminal in this manner, the control portion can start the application program correspondingly to the use state only in a case where the function of starting the application program is validly set, while the application program is not automatically started but the user can manually select and start an arbitrary application program in response to the current situation in a case where the function of starting the application program is invalidly set.

Preferably in this case, the control portion is formed not to terminate but to maintain an application program having been started in a state before the use state is changed in a case where the function of starting the application program corresponding to the use state is invalid, also in a case where the portable information display terminal is switched from the state before the use state is changed to the state after the use state is changed. When forming the portable information display terminal in this manner, the application program is continued even if the use state is changed also in a case where the function of starting the application program corresponding to the use state and the current time is invalidly set, whereby the application remains so uninterrupted that the user can easily perform an operation. Further, a state where an application program not corresponding to the changed use state is run is continued, whereby the user can easily recognize that it is necessary to switch this application program to an application program suitable to the changed used state.

Preferably, the portable information display terminal according to the aforementioned aspect further includes a storage portion storing a use history of an application program used in at least one use state of the first use state and the second use state, and the control portion is formed to decide and start the application program corresponding to the detected use state on the basis of the use history stored in the storage portion. When forming the portable information display terminal in this manner, the control portion can learn and start an application program highly frequently used by the user, for example, on the basis of the use history of application programs used by the user in the past, whereby convenience for the user can be improved.

Preferably in this case, application programs used for at least a prescribed time in the respective use states, i.e. the first use state and the second use state are included in the use history, and the control portion is formed to start an application program used for at least the prescribed time in a case where the portable information display terminal is switched from a state before the use state is changed to a state after the use state is changed. When forming the portable information display terminal in this manner, the control portion can easily grasp an application program, highly frequently used by the user, started in the past, whereby the same can easily start the application program highly frequently used by the user also after the use state is changed.

Preferably in the portable information display terminal according to the aforementioned aspect, the control portion is formed to start an application program corresponding to the use state specified on the basis of the detection result by the use state detection means and also corresponding to a transition mode at a time of making a transition from the use state before the specified use state to the specified use state. When forming the portable information display terminal in this manner, the control portion can start the application program in consideration of not only the current use state but also the transition mode at the time of making a transition from the precedent use state to the current use state, whereby the control portion can start an application program more suitable to the use situation also in consideration of difference between the user's use situations resulting from difference between transition modes.

### Brief Description of the Drawings

[Fig. 1] An overall perspective view for illustrating the structure on a liquid crystal display portion side of a portable information display terminal according to a first embodiment of the present invention.
[Fig. 2] An overall perspective view for illustrating the structure on a surface side of a frame of the portable information display terminal shown in Fig. 1 opposite to a surface provided with a liquid crystal display portion.
[Fig. 3] A perspective view showing a state where the portable information display terminal is grasped while laterally orienting the longitudinal direction of the portable information display terminal shown in Fig. 1.
[Fig. 4] A perspective view showing a state where the portable information display terminal is grasped while vertically orienting the longitudinal direction of the portable information display terminal shown in Fig. 1.
[Fig. 5] A perspective view showing a state standing the frame and the liquid crystal display portion of the portable information display terminal shown in Fig. 1 on a placing surface.
[Fig. 6] A perspective view showing a state laying down the frame and the liquid crystal display portion of the portable information display terminal shown in Fig. 1 on the placing surface.
[Fig. 7] A block diagram for illustrating the internal structure of the portable information display terminal shown in Fig. 1.
[Fig. 8] A diagram showing a display screen of small-scale application software (gadget) displayed on the liquid crystal display portion of the portable information display terminal shown in Fig. 1.
[Fig. 9] A diagram showing a display screen displayed on the liquid crystal display portion in a remote control mode of the portable information display terminal shown in Fig. 1.
[Fig. 10] A perspective view showing a state transmitting infrared rays to a television set in the remote control mode of the portable information display terminal shown in Fig. 1.
[Fig. 11] A diagram showing a display screen of an application playing back a streaming video displayed on the liquid crystal display portion of the portable information display terminal shown in Fig. 1.
[Fig. 12] A flow chart for illustrating a starting and maintenance flow for an application program corresponding to a use state of the portable information display terminal shown in Fig. 1.
[Fig. 13] A flow chart for illustrating a set flow at a time when the application program started correspondingly to the use state of the portable information display terminal shown in Fig. 1 is set.
[Fig. 14] A flow chart for illustrating a starting and maintenance flow for an application program corresponding to a use state of a portable information display terminal according to a second embodiment of the present invention.
[Fig. 15] A flow chart for illustrating a learning flow for causing a storage portion to store an application program first used for at least a constant time in each of use states (a stood state, a laid-down state and a hand-held state) of the portable information display terminal according to the second embodiment of the present invention.
[Fig. 16] A flow chart for illustrating a starting and maintenance flow for an application program corresponding to a use state of a portable information display terminal according to a third embodiment of the present invention.

### Modes for Carrying Out the Invention

Embodiments embodying the present invention are now described on the basis of the drawings.

### (First Embodiment)

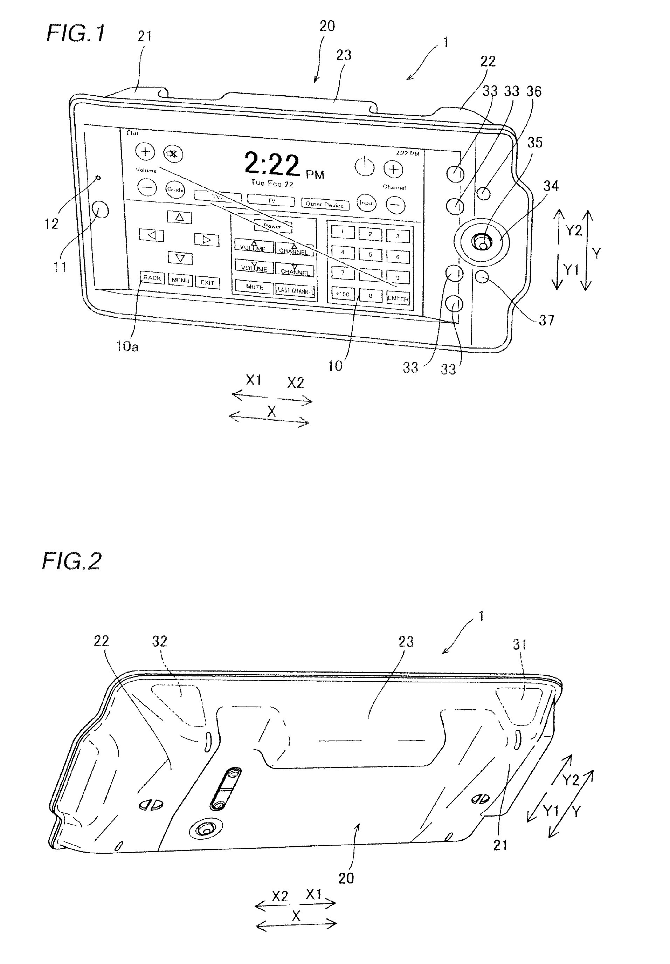

First, the structure of a portable information display terminal 1 according to a first embodiment of the present invention is described with reference to Figs. 1 to 11.

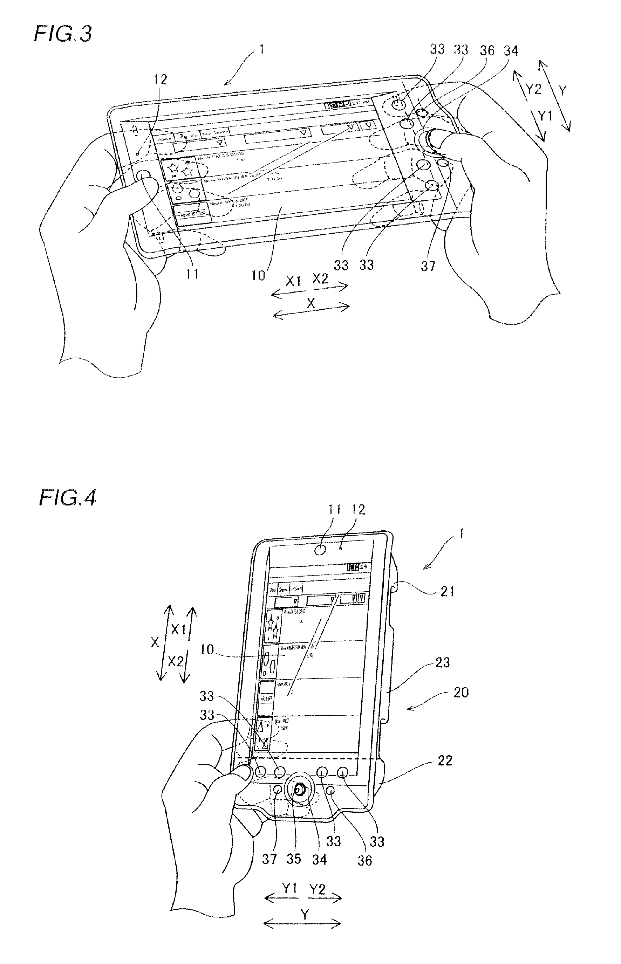

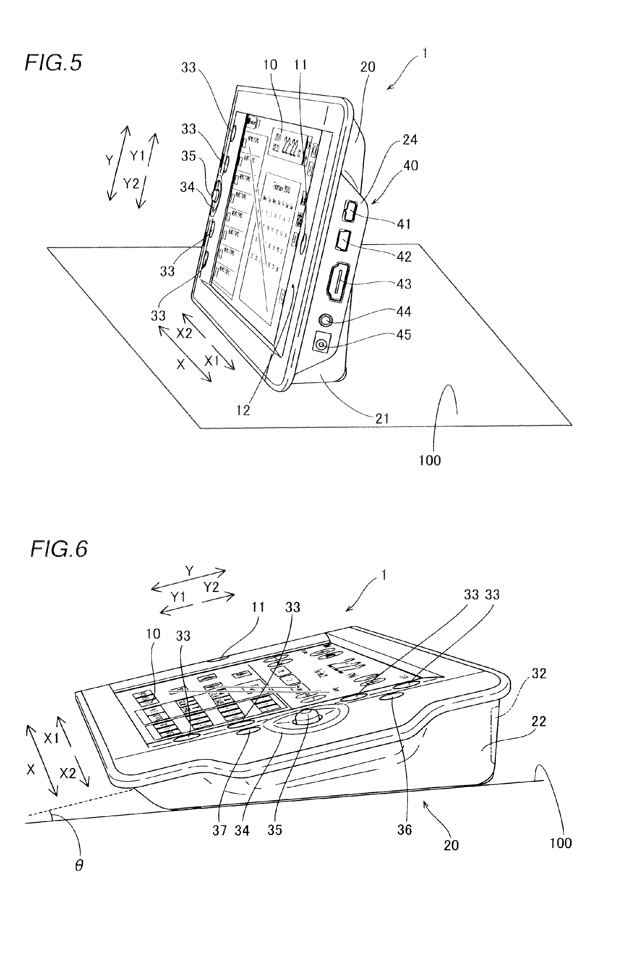

As shown in Figs. 1 and 2, the portable information display terminal 1 according to the first embodiment of the present invention is mainly constituted of a liquid crystal display portion 10 (see Fig. 1) displaying information and a frame 20 provided with the liquid crystal display portion 10 on a surface thereof. The liquid crystal display portion 10 is an example of the "display portion" in the present invention, and the frame 20 is an example of the "housing" in the present invention. This portable information display terminal 1 is formed to be usable in a state (see Figs. 3 and 4) grasped by the user, and to be usable also in a state (see Fig. 5) standing the frame 20 and the liquid crystal display portion 10 on a placing surface 100 and a state (see Fig. 6) laying down the frame 20 and the liquid crystal display portion 10 on the placing surface 100. The state grasped by the user is an example of the "second use state" in the present invention, and the state standing the frame 20 and the liquid crystal display portion 10 on the placing surface 100 is an example of the "first use state" or the "vertically placed use state" in the present invention.

The state laying down the frame 20 and the liquid crystal display portion 10 on the placing surface 100 is an example of the "first use state" or the "laid-down use state" in the present invention.

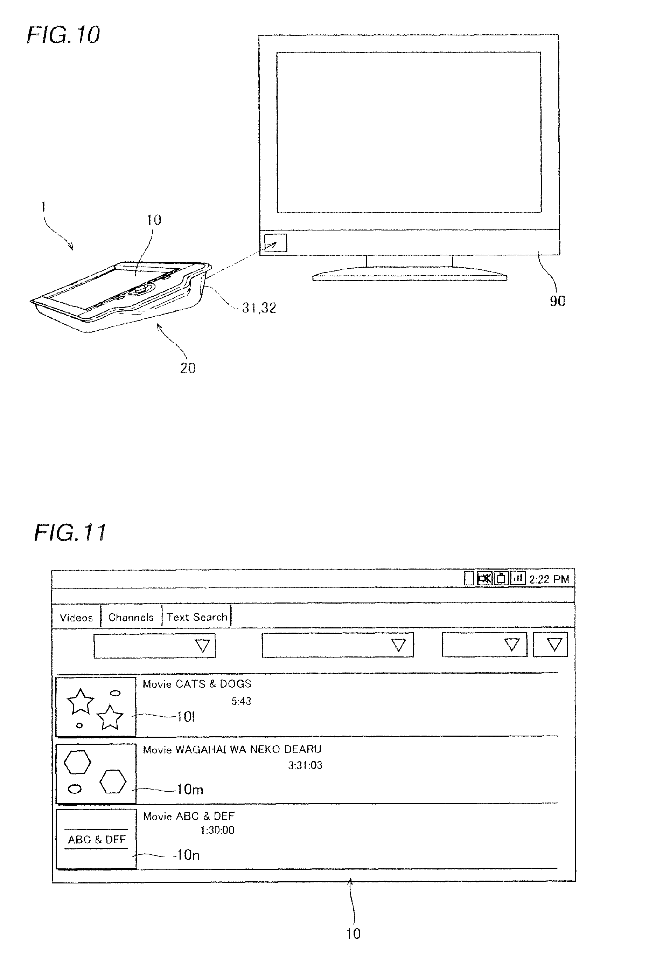

This portable information display terminal 1 is formed to be Internet-connectable, and formed to be capable of using a function of receiving and playing back/outputting streaming distributions, an electronic mail function, a video chat function and a voice chat function by performing Internet connection. Further, the portable information display terminal 1 is also formed to be usable as a remote control for a media player and a television set 90 (see Fig. 10) etc. by shifting to a remote control mode also in a case where the same is not Internet-connected. The portable information display terminal 1 is capable of displaying a calender, a clock etc. by small-scale application software (gadget) in the state (see Fig. 5) standing the frame 20 and the liquid crystal display portion 10.

The structures of the liquid crystal display portion 10 and the frame 20 of the portable information display terminal 1 are now described in detail. The liquid crystal display portion 10 has a touch panel function, and is so formed that the user presses down operation buttons 10a displayed on the liquid crystal display portion 10 to be capable of operations according to application programs. A camera unit 11 is set on an arrow X1 direction side of the liquid crystal display portion 10. This camera unit 11 has a function of inputting an image at a time of a video chat in a case where the user uses the portable information display terminal 1 in a state grasped by the user, for example.

A microphone unit 12 is set in the vicinity of the camera unit 11. This microphone unit 12 has a function of inputting sounds in the voice chat and the video chat etc., for example.

The frame 20 is made of resin. As shown in Figs. 1 and 2, a plurality of protrusions 21, 22 and 23 are integrally provided on a surface of the frame 20 opposite to the surface provided with the liquid crystal display portion 10. The protrusions 21 and 22 are provided in the vicinity of both end portions in the longitudinal direction (direction X) of the frame 20 to extend in the short-side direction (direction Y) of the frame 20. As shown in Fig. 6, the protrusions 21 (see Fig. 2) and 22 are so formed that the thicknesses gradually increase from a first end side (arrow Y1 direction side) toward a second end side (arrow Y2 direction side) in the short-side direction (direction Y) of the frame 20 respectively. In other words, the protrusions 21 and 22 are formed to have wedge shapes tapering in a tapering manner from the second side (arrow Y2 direction side) toward the first side (arrow Y1 direction side) in the short-side direction of the frame 20 as viewed from the longitudinal direction (the arrow X1 direction and the arrow X2 direction) of the frame 20 respectively.

The protrusions 21 and 22 are so formed in the aforementioned manner that the user places the portable information display terminal 1 on the placing surface 100 while directing surfaces of the protrusion 21 and the protrusion 22 on the arrow Y2 direction sides downward, whereby the protrusions 21 and 22 are capable of supporting the frame 20 in a state standing the frame 20 and the liquid crystal display portion 10, as shown in Fig. 5. Further, the protrusions 21 (see Fig. 2) and 22 are capable of supporting the frame 20 in a state inclining the frame 20 and the liquid crystal display portion 10 by a prescribed angle θ and laying down the same with respect to the placing surface 100, as shown in Fig. 6.

In addition, the protrusions 21 and 22 are so formed in the aforementioned manner that the user can grasp the protrusions 21 and 22 with both hands while laterally orienting the longitudinal direction (direction X) of the frame 20 and the liquid crystal display portion 10 as viewed from the user. As shown in Fig. 4, the protrusion 22 is graspable with one hand (left hand) while vertically orienting the longitudinal direction (direction X) of the frame 20 and the liquid crystal display portion 10.

The protrusion 23 is provided in the vicinity of a second end portion (arrow Y2 direction end portion) in the short-side direction (direction Y) of the frame 20 between the protrusions 21 and 22, as shown in Fig. 2. A secondary cell (lithium ion cell) for supplying power to the portable information display terminal 1 is built (stored) in this protrusion 23.

Infrared communication portions 31 and 32 are built in end surfaces of the protrusions 21 and 22 on second end portion sides (arrow Y2 direction sides) respectively. The infrared communication portions 31 and 32 are examples of the "communication portion" in the present invention. These infrared communication portions 31 and 32 are formed to emit infrared rays including prescribed signals (remote control signals) capable of operating the media player and the television set 90 (see Fig. 10) etc. in a remote control mode described later.

Various types of information processor mode switches 33 are provided on portions on an arrow X2 direction side in the longitudinal direction (direction X) of the liquid crystal display portion 10. The various types of information processor mode switches 33 are switches used in an information processor mode processing an electronic mail, video and voice chats and the like respectively. A four-directional movable switch 34 (selection switch) is provided in the vicinity of the various types of information processor mode switches 33 on the arrow X2 direction side. A decision switch 35 is provided on a central portion of the four-directional movable switch 34. The four-directional movable switch 34 and the decision switch 35 are formed to be usable in both of the remote control mode and the information processor mode respectively.

A remote control mode transition switch 36 capable of switching the remote control mode and the information processor mode is provided on the arrow Y2 direction side of the four-directional movable switch 34. A return function switch 37 for returning an operation screen OSD-displayed on a display portion of a remote control operation object apparatus (television or the like) in the remote control mode from the current state to an immediately precedent state is provided on the arrow Y1 direction side of the four-directional movable switch 34.

As shown in Fig. 5, a plurality of connection portions 40 are provided on a side surface portion 24 on the arrow X1 direction side of the frame 20. These connection portions 40 include two USB connection portions 41 and 42, an HDMI connection portion 43, a voice cable connection portion 44 and a power supply connector 45.

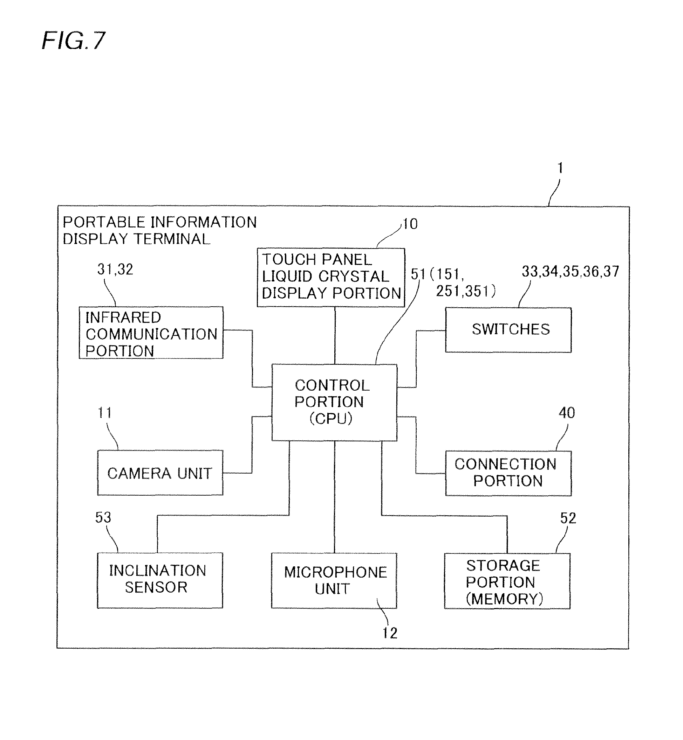

The internal structure of the portable information display terminal 1 is now described. The frame 20 of the portable information display terminal 1 is provided with a control portion (CPU) 51 managing control of the portable information display terminal 1, a storage portion (memory) 52 and an inclination sensor 53, as shown in Fig. 7. The inclination sensor 53 is an example of the "use state detection means" in the present invention.

The storage portion 52 stores application programs run by the control portion 51. Further, the storage portion 52 stores a use history of application programs used in a state (hereinafter referred to as a hand-held state (see Figs. 3 and 4)) where the user uses the portable information display terminal 1 while grasping the portable information display terminal 1 with his/her hand, a state (hereinafter referred to as a stood state (see Fig. 5)) where the user uses the portable information display terminal 1 while standing the frame 20 and the liquid crystal display portion 10 on the placing surface 100 and a state (hereinafter referred to as a laid-down state (see Fig. 6)) where the user uses the portable information display terminal 1 while laying down the frame 20 and the liquid crystal display portion 10 on the placing surface 100.

According to the first embodiment, the inclination sensor 53 has a function of acquiring an inclination of the frame 20 (see Fig. 1). The inclination sensor 53 is provided for detecting which use state the portable information display terminal 1 is in, i.e. in the stood state (see Fig. 5), in the laid-down state (see Fig. 6) or in the hand-held state (see Figs. 3 and 4).

As to an inclination in the stood state (see Fig. 5) and an inclination in the laid-down state (see Fig. 6), angles of the frame 20 with respect to the placing surface 100 are different from each other by at least 90 degrees due to the outer shape of the aforementioned frame 20, and hence the control portion 51 is capable of easily determining and specifying the respective states where the frame 20 is placed on the placing surface 100 with different inclinations. In the hand-held state (see Figs. 3 and 4), a detection value detected by the inclination sensor 53 changes every detection time due to the fact that the user finely moves, and hence the control portion 51 is enabled to distinguish the stood state and the laid-down state from each other.

The inclination sensor 53 is formed to be capable of detecting a vertically oriented use state (hereinafter referred to as a vertically held state (see Fig. 4)) where the user uses the portable information display terminal 1 while laterally orienting the longitudinal direction of the frame 20 and a laterally oriented use state (hereinafter referred to as a laterally held state (see Fig. 3)) where the user uses the portable information display terminal 1 while laterally orienting the longitudinal direction of the frame 20. The liquid crystal display portion 10 is rotated by about 90 degrees in the vertically held state and the laterally held state as shown in Figs. 3 and 4, whereby the control portion 51 is capable of easily determining and specifying the respective states where the portable information display terminal 1 is grasped with different inclinations in the vertically held state and the horizontally held state.

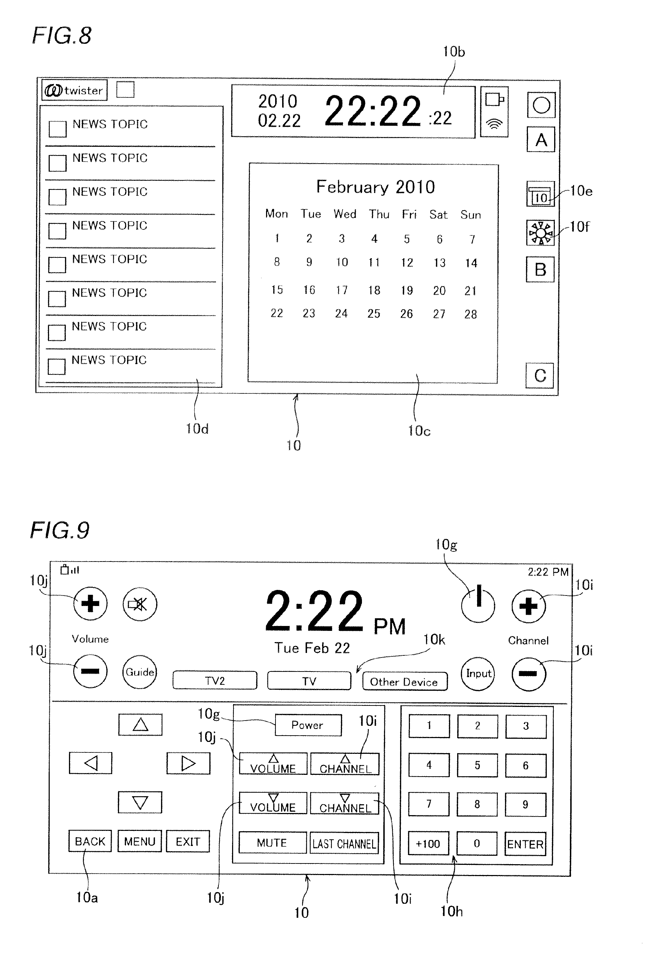

According to the first embodiment, the control portion 51 is formed to determine and specify the use state of the frame 20 and the liquid crystal display portion 10 on the basis of the inclination acquired by the inclination sensor 53. Further, the control portion 51 is formed to automatically start an application program corresponding to the specified use state. More specifically, the control portion 51 is formed to start an application program not premised to be operated by the user in a case of specifying that the portable information display terminal 1 is in the stood state (see Fig. 5). The application program not premised to be operated by the user is an application, passive for the user, including a gadget displaying a clock 10b, a calender 10c and topics of news 10d etc. on the liquid crystal display portion 10 shown in Fig. 8, for example. This gadget is so formed that icons 10e and 10f etc. of the liquid crystal display portion 10 are so operated that a scheduler and a weather report etc. are displayable on the liquid crystal display portion 10 respectively.

The control portion 51 is formed to start an application program premised to be operated by the user in a case of specifying that the portable information display terminal 1 is in the laid-down state (see Fig. 6). The application program premised to be operated by the user is an application, active for the user, according to which the portable information display terminal 1 is usable as a remote control for the media player and the television set 90 (see Fig. 10) etc. as shown in Fig. 9, for example. This remote control application program is a program used when the portable information display terminal 1 is shifted to the remote control mode. The control portion 51 is formed to display a power supply button 10g for switching a power source for the television set 90 to ON or OFF, a channel button group 10h for switching the channel of a broadcasting received by the television set 90, a volume control button 10j controlling the volume of sounds output from the television set 90 and an object switching button group 10k changing an operation object of the remote control such as a television set (not shown) other than the television set 90 (see Fig. 10) or the media player (not shown) etc. on the liquid crystal display portion 10 having the touch panel function in the remote control application program, for example.

The control portion 51 is formed to start an application program premised to be operated by the user also in a case of recognizing that the portable information display terminal 1 is in the hand-held state (see Figs. 3 and 4). The application program premised to be operated by the user is an application program, active for the user, capable of playing back a streaming video, as shown in Fig. 11, for example. This video playback application program is a program used in the information processor mode. The control portion 51 is formed to be capable of selecting any one video content from among a plurality of video contents 10l, 10m and 10n etc. displayed through Internet lines on the touch panel in this video playback application program, for example. Further, the control portion 51 is formed, when any video content is selected by the user from among the video contents 10l, 10m and 10n etc., to be capable of playing back the selected video content in the video playback application program.

The control portion 51 is formed to determine which use state the portable information display terminal 1 is in, i.e. in the state (state of Figs. 5 and 6) placed on the placing surface 100 or in the state (state of Figs. 3 and 4) grasped by the user by determining whether or not the inclination value detected by the inclination sensor 53 regularly changes piecemeal. The control portion 51 is formed to determine that the portable information display terminal 1 is in the state grasped by the user in the case where the inclination value detected by the inclination sensor 53 regularly changes piecemeal. Further, the control portion 51 is formed to determine that the portable information display terminal 1 is in the state placed on the placing surface 100 in a case where the inclination value detected by the inclination sensor 53 is stable.

According to the first embodiment, the portable information display terminal 1 is so formed that the user can set an application program started in response to the use state (the stood state, the laid-down state where the user uses the portable information display terminal 1 and the hand-held state). Further, the portable information display terminal 1 is so formed that the user can invalidate a function (automatic starting mode) of automatically starting the application program corresponding to the use state. In other words, the portable information display terminal 1 is formed to be capable of switching the automatic starting mode to either valid or invalid. In addition, the portable information display terminal 1 is so formed that the user can set validation or invalidation of the function of starting the application program corresponding to the use state (the stood state, the laid-down state where the user uses the potable information display terminal 1 or the hand-held state) determined on the basis of the inclination.

A starting and maintenance flow for the application program corresponding to the use state of the portable information display terminal 1 according to the first embodiment is now described with reference to Figs. 3 to 7 and 12.

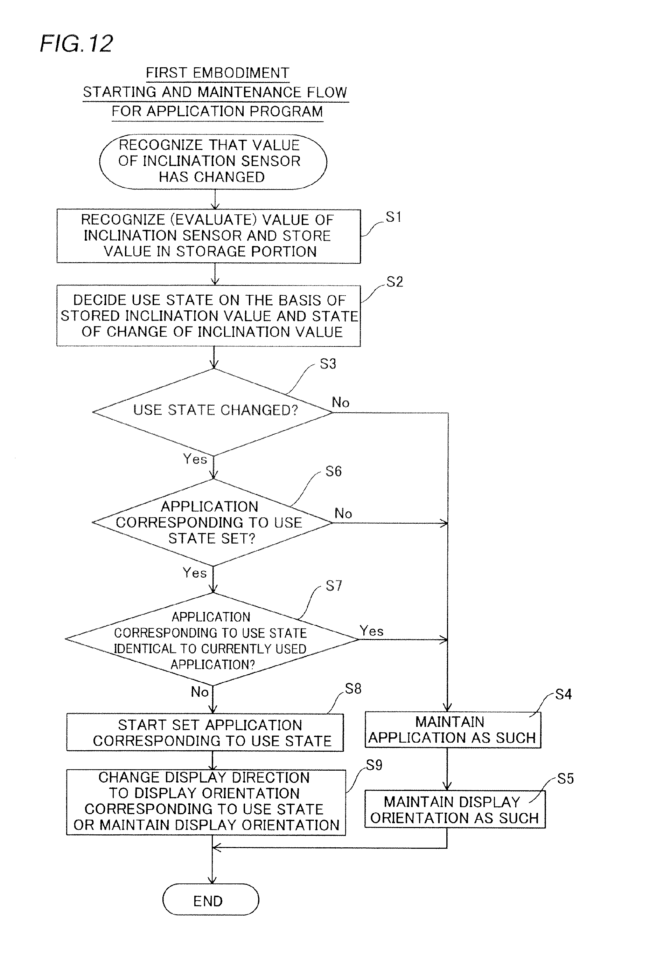

As shown in Fig. 12, the control portion 51 recognizes that the inclination value acquired by the inclination sensor 53 has changed (event occurrence), whereby the starting flow for the application program corresponding to the use state of the portable information display terminal 1 is started. First, the inclination value acquired from the inclination sensor 53 is recognized (evaluated) by the control portion 51 (see Fig. 7), and the inclination value is stored in the storage portion 52 at a step S1. At a step S2, which state of the stood state (see Fig. 5), the laid-down state (see Fig. 6) and the hand-held state (see Figs. 3 and 4) the portable information display terminal 1 is in is determined on the basis of the inclination value stored this time and states of change of a stored past inclination value and the inclination value stored this time. In other words, the portable information display terminal 1 is decided to be in the hand-held state in a case where the stored past inclination value and the inclination value stored this time change piecemeal. Further, the portable information display terminal 1 is decided to be "in the stood state" in a case where the stored past inclination value and the inclination value stored this time do not change piecemeal but the inclination value stored this time is in the range of the inclination value in the stood state, while the portable information display terminal 1 is decided to be "in the laid-down state" in a case where the inclination value stored this time is in the range of the inclination value in the laid-down state.

Thereafter whether or not the decided state has been changed from a state (before event occurrence) before the inclination value acquired by the inclination sensor 53 changes (is determined by the control portion 51 at a step S3. In a case where it is determined at the step S3 that the decided state has not been changed from the state (before event occurrence) before the inclination value acquired by the inclination sensor 53 changes, the control portion 51 advances to a step S4. The state has not been changed, and hence the application program is not changed but the application program is maintained as such at the step S4, and the control portion 51 advances to a step S5. The display orientation displayed on the liquid crystal display portion 10 is not changed either but maintained as such at the step S5. Then, the aforementioned series of starting and maintenance flow for the application program terminates.

In a case where it is determined at the step S3 that the decided state has been changed from the state (before event occurrence) before the inclination value acquired by the inclination sensor 53 changes, the control portion 51 advances to a step S6. At the step S6, whether or not an application program corresponding to the changed state is set is determined by the control portion 51. In other words, whether or not an application program to be automatically started as to each of the stood state, the laid-down state and the hand-held state is set by the user in a set flow for the application program described later is determined at the step S6. In a case where it is determined at the step s6 that the application program corresponding to the changed state has not been set, the control portion 51 advances to the aforementioned step S4 and the step S5, and the starting and maintenance flow for the application program terminates. In other words, such a state is maintained at the step S4 that the application program having been started in the state before the use state is changed is not terminated but run, even if the use state of the portable information display terminal 1 has been changed. In a case where it is determined at the step S6 that the application program corresponding to the changed state has been set, the control portion 51 advances to a step S7.

At the step S7, whether or not the application program having been set is the same application program as a currently used application program is determined by the control portion 51. In a case where it is determined at the step S7 that the application program having been set is the same application program as the currently used application program, the application program may not be changed, and hence the control portion 51 advances to the aforementioned step S4 and the step S5, and the starting and maintenance flow for the application program terminates. In a case where it is determined at the step S7 that the application program having been set is not the same application program as the currently used application program, the control portion 51 advances to a step S8.

Thereafter the application program, set by the user, corresponding to the changed state is started at the step S8. In other words, the application program having been run before the change is terminated, and the application program, set by the user, corresponding to the changed state is started. In a case where the portable information display terminal 1 is changed to the stood state (see Fig. 5) as a specific example, the application program having been run before the change is terminated, while the application program such as the gadget (application displaying the clock, the calender and the news etc.) not premised to be operated by the user is started. In a case where the portable information display terminal 1 is changed to the laid-down state (see Fig. 6), the application program having been run before the change is terminated, while an application program such as a media player application or a remote control application premised to be operated by the user is started. In a case where the portable information display terminal 1 is changed to the hand-held state (see Figs. 3 and 4), an application program for an application or the like capable of playing back a streaming video is newly started.

At a step S9, the display direction is changed to a display orientation corresponding to the state or the display orientation is maintained, and the aforementioned starting and maintenance flow for the application program terminates. More specifically, the orientation of the display displayed on the liquid crystal display portion 10 is rotated by 180 degrees in a case where the state is changed between the stood state and the laid-down state or the laterally held state of the hand-held state, for example. In a case where the state is changed between the vertically held state in the hand-held state, the stood state, the laid-down state or the laterally held state of the hand-held state, on the other hand, the orientation of the display displayed on the liquid crystal display portion 10 is rotated by 90 degrees or 270 degrees. In a case where the state is changed between the laterally held state in the hand-held state and the laid-down state, the orientation of the display displayed on the liquid crystal display portion 10 is not changed but maintained as such.

A set flow at a time when the application program automatically started correspondingly to the changed use state when the use state of the portable information display terminal 1 according to the present invention is changed is set by the user is now described with reference to Figs. 3 to 7 and 13.

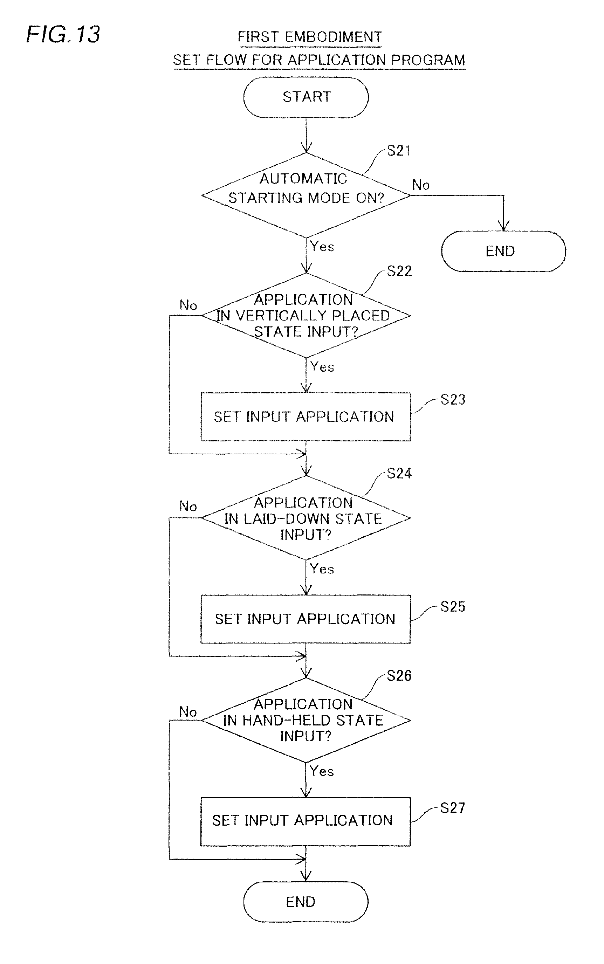

First, whether or not the automatic starting mode automatically starting the application program corresponding to the changed use state when the use state is changed is selected by the user is determined by the control portion 51 (see Fig. 7) at a step S21, as shown in Fig. 13. In other words, whether the automatic starting mode has been validated or invalidated is determined. In a case where it is determined at the step S21 that the automatic starting mode for starting the application program corresponding to the use state has been set to off (invalid), setting of the application program is not performed but the set flow for the application program terminates. In a case where it is determined at the step S21 that the automatic starting mode for starting the application program corresponding to the use state has been set to on (valid), the control portion 51 advances to a step S22.

At the step S22, whether or not an application program automatically started in the state (stood state (see Fig. 5)) where the user uses the portable information, display terminal 1 while standing the frame 20 and the liquid crystal display portion 10 on the placing surface 100 has been input by the user is determined by the control portion 51. In a case where it is determined at the step S22 that the application program automatically started in the stood state (see Fig. 5) has been input by the user, the control portion 51 advances to a step S23. At the step S23, the application program input by the user is set by being written in the storage portion (memory) 52, and the control portion 51 advances to a step S24. In a case where it is determined at the step S22 that the application program automatically started in the stood state (see Fig. 5) has not been input by the user, the control portion 51 advances to the step S24.

Thereafter whether or not the application program automatically started in the state (laid-down state (see Fig. 6)) where the user uses the portable information display terminal 1 while laying down the frame 20 and the liquid crystal display portion 10 on the placing surface 100 has been input by the user is determined by the control portion 51 at the step S24. In a case where it is determined at the step S24 that the application program automatically set in the laid-down state (see Fig. 6) has been input by the user, the control portion 51 advances to a step S25. The application program input by the user is set by being written in the storage portion (memory) 52 at the step S25, and the control portion 51 advances to a step S26. In a case where it is determined at the step S24 that the application program automatically set in the laid-down state (see Fig. 6) has not been input by the user, the control portion 51 advances to a step S26.

At the step S26, whether or not an application program automatically started in the state (hand-held state (see Figs. 3 and 4)) where the frame 20 is grasped by the user has been input by the user is determined by the control portion 51. In a case where it is determined at the step S26 that the application program automatically started in the hand-held state (see Figs. 3 and 4) has been input by the user, the control portion 51 advances to a step S27. At the step S27, the application program input by the user is set by being written in the storage portion (memory) 52, and the set flow for the application program terminates. In a case where it is determined at the step S26 that the application program automatically started in the hand-held state (see Figs. 3 and 4) has not been input by the user, setting of the application program is not performed but the set flow for the application program terminates.

According to the first embodiment, as hereinabove described, the inclination sensor 53 detecting which use state the portable information display terminal 1 is in, i.e. in the use state where the user uses the portable information display terminal 1 while standing the frame 20 and the liquid crystal display portion 10 on the placing surface 100, in the use state where the user uses the portable information display terminal 1 while laying down the frame 20 and the liquid crystal display portion 10 on the placing surface 100 or in the use state where the user uses the portable information display terminal 1 while manually grasping the frame 20 is provided, whereby not only the use state where the user uses the portable information display terminal 1 while manually grasping the frame 20 but also the use state where the user uses the portable information display terminal 1 while standing the frame 20 and the liquid crystal display portion 10 on the placing surface 100 and the use state where the user uses the portable information display terminal 1 while laying down the frame 20 and the liquid crystal display portion 10 on the placing surface 100 can be detected, dissimilarly to a touch sensor detecting the way the user holds the frame. Thus, the use state of the portable information display terminal 1 can be detected also in a case of the portable information display terminal 1 assumed to be used in a placed state. Further, the control portion 51 determines and specifies the use state on the basis of the detection result of the inclination sensor 53 and starts the application program corresponding to the specified use state, whereby the same can start the application program corresponding to each use state of the portable information display terminal 1 not only in the case (hand-held state) where the frame 20 is grasped by the user but also in the case (the laid-down state or the stood state) where the portable information display terminal 1 is placed. Thus, the control portion 51 can start the application program correspondingly to the use state also in a case where such a state is assumed that the portable information display terminal 1 is used in the placed state.

According to the first embodiment, as hereinabove described, the control portion 51 starts the application program corresponding to the hand-held state and changes the orientation of the display displayed on the liquid crystal display portion 10 in response to the lateral orientation or the vertical orientation in a case of specifying that the portable information display terminal 1 is in the state (hand-held state) where the user uses the portable information display terminal 1 while grasping the frame 20 with his/her hand, whereby the liquid crystal display portion 10 can display information with orientations of display suitable to respective ones in the case where the user grasps the frame 20 in the vertically oriented use state (vertically held state) and a case where the user grasps the frame 20 in the laterally oriented use state (laterally held state).

According to the first embodiment, as hereinabove described, the control portion 51 starts, in a case of specifying that the portable information display terminal 1 is in the use state where the user uses the portable information display terminal 1 while standing the frame 20 and the liquid crystal display portion 10 on the placing surface 100 or in the use state where the user uses the portable information display terminal 1 while laying down the frame 20 and the liquid crystal display portion 10, the application program corresponding to this stood state or the laid-down state and changes the orientation of the display displayed on the liquid crystal display portion 10 in response to the stood state or the laid-down state, whereby the liquid crystal display portion 10 can display information with orientations of display suitable to respective ones in the case where the user uses the portable information display terminal 1 in the stood state and in the case where the user uses the portable information display terminal 1 in the laid-down state.

According to the first embodiment, as hereinabove described, the control portion 51 starts the application program set by the user in response to the use state so that the user previously sets the application program started in response to each use state so that the control portion 51 can automatically start the application program set by the user in a case where the user changes the use state, whereby the control portion 51 can start an application program coinciding with a use mode of the user in each use state.

According to the first embodiment, as hereinabove described, the control portion 51 terminates the application program having been started in the use state before the specified use state and starts the application program corresponding to the specified use state when starting the application program corresponding to the specified use state, whereby the control portion 51 can normally terminate the unswitched application program and thereafter properly switch the portable information display terminal 1 to the application program corresponding to the change of the use state, dissimilarly to a case of unauthorizedly interrupting or forcibly terminating the unswitched application program. As a result of this, the control portion 51 can stably operate each application program run in the portable information display terminal 1.

According to the first embodiment, as hereinabove described, the control portion 51 starts the application program not premised to be operated by the user in the case of the use state where the user uses the portable information display terminal 1 while standing the frame 20 and the liquid crystal display portion 10 on the placing surface 100, whereby the same can start the application program suitable to the use state, unsuitable to be operated by the user, where the frame 20 and the liquid crystal display portion 10 stand with respect to the placing surface 100. Further, the control portion 51 starts the application program premised to be operated by the user in the case of the use state where the user uses the portable information display terminal 1 while laying down the frame 20 and the liquid crystal display portion 10 on the placing surface 100, whereby the same can start the application program, easily operable by the user, corresponding to the use state where the frame 20 and the liquid crystal display portion 10 lie down on the placing surface 100. As a result of these, the control portion 51 can start the application program suitable to each use state in response to the presence or absence of the premise that the user operates the application program in the same placed state.

According to the first embodiment, as hereinabove described, the control portion 51 starts the application program corresponding to the remote control mode capable of transmitting remote control signals from the infrared communication portions 31 and 32 in a case of specifying that the portable information display terminal 1 is in the use state where the user uses the portable information display terminal 1 while laying down the frame 20 and the liquid crystal display portion 10 on the placing surface 100 on the basis of the detection result by the inclination sensor 53 so that the portable information display terminal is automatically switched to the remote control mode when the user simply arranges the frame 20 and the liquid crystal display portion 10 to be in the state laid down on the placing surface 100, whereby the user can easily use the portable information display terminal 1 as a remote control in the laid-down state without performing an operation of switching the portable information display terminal 1 to the remote control mode.

According to the first embodiment, as hereinabove described, the application program started in a case where the portable information display terminal 1 is specified to be in the use state where the user uses the portable information display terminal 1 while standing the frame 20 and the liquid crystal display portion 20 on the placing surface 100 on the basis of the detection result by the inclination sensor 53 is an application program so formed that information displayed on the liquid crystal display portion 10 is brawsable in a state where the user does not operate the portable information display terminal 1. Such an application program is a passive application program including the gadget displaying the clock 10b, the calender 10c and the topics of the news 10d (see Fig. 8) etc. on the liquid crystal display portion 10. Thus, also when the portable information display terminal 1 is in a use state unsuitable to be positively operated by the user, the control portion 51 can start an application program suitable to such a used state. Also in the use state where the user uses the portable information display terminal 1 while standing the liquid crystal display portion 10 on the placing surface 100, therefore, the portable information display terminal 1 can be caused to effectively function.

According to the first embodiment, as hereinabove described, the control portion 51 is formed to start the application program premised to be operated by the user also in a case of specifying that the portable information display terminal 1 is in the use state where the user uses the portable information display terminal 1 while manually grasping the frame 20 in addition to the case of the use state where the user uses the portable information display terminal 1 while laying down the frame 20 and the liquid crystal display portion 10 on the placing surface 100, whereby the same can start the application program corresponding to the hand-held state which is a use state where the user can easily operate the portable information display terminal 1. Also according to this, the portable information display terminal 1 can be caused to effectively function.

According to the first embodiment, as hereinabove described, the control portion 51 is formed to be capable of determining and specifying the stood state and the laid-down state on the basis of the inclinations of the frame 20 in the stood state and the laid-down state acquired by the inclination sensor 53, whereby the stood state and the laid-down state can be easily detected on the basis of the inclinations of the frame 20.

According to the first embodiment, as hereinabove described, the control portion 51 determines and specifies the stood state and the laid-down state on the basis of the inclination angle detected by the inclination sensor 53 and determines and specifies the hand-held state on the basis of the changing state of the inclination value detected by the inclination sensor 53 so that the control portion 51 can easily determine and specify the stood state and the laid-down state on the basis of the absolute inclination angle with the inclination sensor 53 and can determine and specify the hand-held state on the basis of the changing state of the inclination value, whereby the same can easily determine and specify the three states, i.e. the stood state, the laid-down state and the hand-held state.

According to the first embodiment, as hereinabove described, the control portion 51 is formed to be capable of determining and specifying the stood state and the laid-down state on the basis of the different inclination of the frame 20 in the stood state and the laid-down state based on the outer shape of the frame 20 acquired by the inclination sensor 53, whereby the user can bring the frame 20 and the liquid crystal display portion 10 into the stood stood state and the laid-down state due to the outer shape of the frame 20 without an auxiliary tool such as a stand, and the control portion 51 can easily determine and detect the stood state and the laid-down state due to the difference between the inclinations based on the outer shape.

According to the first embodiment, as hereinabove described, the control portion 51 determines and specifies the use state where the user uses the portable information display terminal 1 while standing the frame 20 and the liquid crystal display portion 10 on the placing surface 100 and the use state where the user uses the portable information display terminal 1 while laying down the frame 20 and the liquid crystal display portion 10 on the placing surface 100 and determines and specifies the use state where the user uses the portable information display terminal 1 while manually grasping the frame 20 by comparing the inclination angle before the use state stored in the storage portion (memory) 52 is changed and the inclination angle after the use state stored in the storage portion 52 is changed with each other, whereby the same can reliably determine and specify the use state of the portable information display terminal 1 on the basis of change in the inclination angle before and after the use state is changed.

According to the first embodiment, as hereinabove described, the control portion 51 determines and specifies the use state where the user uses the portable information display terminal 1 while manually grasping the frame 20 in the case where the inclination angle detected by the inclination sensor 53 changes with time in the prescribed range and determines and specifies the use state where the user uses the portable information display terminal 1 while standing the frame 20 and the liquid crystal display portion 10 on the placing surface 100 and the use state where the user uses the portable information display terminal 1 while laying down the frame 20 and the liquid crystal display portion 10 on the placing surface 100 in the case where the inclination angle detected by the inclination sensor 53 does not change with time in the prescribed range, whereby the same can more correctly determine and specify the use state of the portable information display terminal 1.

According to the first embodiment, as hereinabove described, the control portion 51 is formed to be capable of determining and specifying the stood state and the laid-down state on the basis of the inclinations, different from each other by at least 90 degrees, of the frame 20 in the stood state and the laid-down state based on the outer shape of the frame 20 acquired by the inclination sensor 53, whereby the same can reliably determine and detect the stood state and the laid-down state due to the difference of at least 90 degrees between the inclinations based on the outer shape of the frame 20.

According to the first embodiment, as hereinabove described, the portable information display terminal 1 is so formed that the user can set validation or invalidation of the function (automatic starting mode) of starting the application program corresponding to the detected use state while the control portion 51 starts the application program corresponding to the detected use state in the case where the function of starting the application program corresponding to the use state is valid, whereby the control portion 51 can start the application program correspondingly to the use state only in the case where the function of starting the application program is validly set, while the application program is not automatically started but the user can manually select and start an arbitrary application program in response to the current situation in the case where the function of starting the application program is invalidly set.

According to the first embodiment, as hereinabove described, the control portion 51 does not terminate but maintains the application program having been started in the state before the use state is changed also in the case where the portable information display terminal 1 is switched from the state before the use state is changed to the state after the use state is changed in the case (case of "No" at the step S6 shown in Fig. 12) where the function of starting the application program corresponding to the use state is invalid so that the application is continued even if the use state is changed also in the case where the function of starting the application program corresponding to the use state is invalidly set, whereby the application remains so uninterrupted that the user can easily perform an operation. Further, a state where an application program not corresponding to the changed use state is run is continued, whereby the user can easily recognize that it is necessary to switch this application program to an application program suitable to the changed used state.

### (Second Embodiment)

A portable information display terminal according to a second embodiment of the present invention is now described with reference to Figs. 3 to 7. In this second embodiment, an example of deciding an automatically started application program on the basis of a use history stored every use state is described, dissimilarly to the aforementioned first embodiment capable of setting the application program automatically started correspondingly to the use state of the portable information display terminal 1.

According to the second embodiment, a control portion (CPU) 151 is formed to decide and start an application program corresponding to a use state on the basis of a use history stored in a storage portion 52, as shown in Fig. 7. For example, the control portion 151 is formed to cause the storage portion 52 to store (learn) an application program first used for at least a constant time in a laid-down state after the portable information display terminal is switched to a state (laid-down state (see Fig. 6)) where the user uses the portable information display terminal while laying down a frame 20 and a liquid crystal display portion 10 from another use state. The control portion 151 is formed to start an application program previously first used for at least the constant time in a case where the portable information display terminal is subsequently switched to the laid-down state from another use state.

For example, further, the control portion 151 is formed, after the portable information display terminal is switched to a state (stood state (see Fig. 5)) where the user uses the portable information display terminal while standing the frame 20 and the liquid crystal display portion 10 from another use state, to cause the storage portion 52 to store (learn) an application program first used for at least the constant time in the stood state. Further, the control portion 151 is formed, in a case where the portable information display terminal is subsequently switched to the stood state from another use state, to start an application program previously first used for at least the constant time. In addition, the control portion 151 is formed, after the portable information display terminal is switched to a state (hand-held state (see Figs. 3 and 4) where the user uses the portable information display terminal while grasping the frame 20 with his/her hand from another use state, to cause the storage portion 52 to store (learn) an application program first used for at least the constant time in the hand-held state. Further, the control portion 151 is formed to start an application program previously first used for at least the constant time in a case where the portable information display terminal is subsequently switched to the hand-held state from another use state.

A starting and maintenance flow for an application program corresponding to a use state of the portable information display terminal according to the second embodiment is now described with reference to Figs. 3 to 7 and 14. In this flow of the second embodiment, a step S1 to a step S5, a step S7 and a step S9 are similar to those in the starting and maintenance flow for the application program corresponding to the use state of the portable information display terminal 1 according to the aforementioned first embodiment. Processing different from the starting and maintenance flow for the application program corresponding to the use state of the portable information display terminal 1 according to the first embodiment is now described.

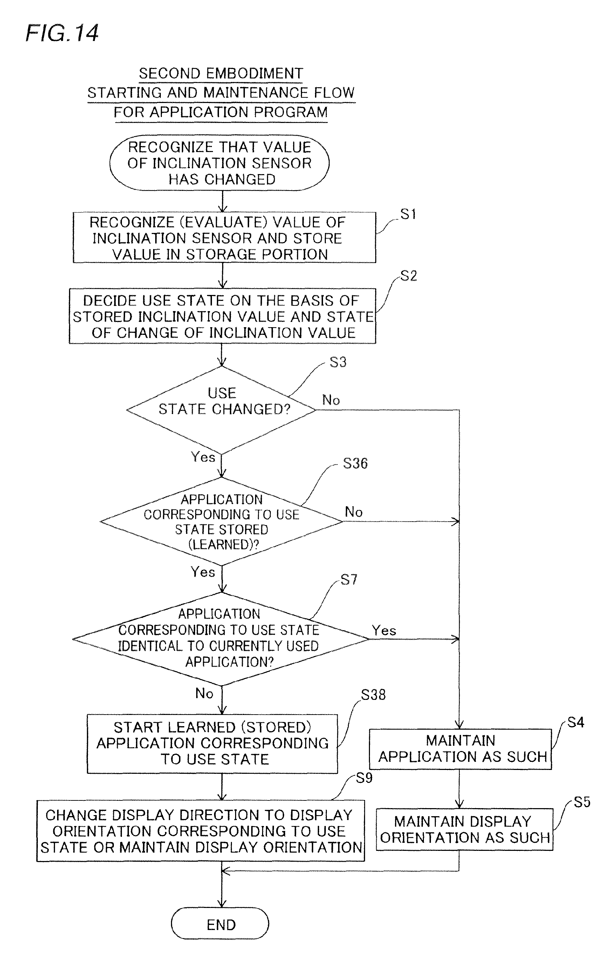

In a case where it is determined at the step S3 by the control portion 151 (see Fig. 7) that the decided state has been changed from the state (before event occurrence) before the inclination value acquired by the inclination sensor 53 changes, the control portion 151 advances to a step S36, as shown in Fig. 14. At the step S36, whether or not an application program corresponding to the changed state is stored (learned) is determined by the control portion 151. In other words, whether or not an application program automatically started as to each of the stood state (see Fig. 5), the laid-down state (see Fig. 6) and the hand-held state (see Figs. 3 and 4) is stored (learned) by the user is determined in a storage (learning) flow for an application program described later at the step S36. In a case where it is determined at the step S36 that the application program corresponding to the changed state has not been stored (learned), the control portion 151 advances to the step S4 and the step S5, and the starting and maintenance flow for the application program terminates. In a case where it is determined at the step S36 that the application program corresponding to the changed state has been stored (learned), the control portion 151 advances to the step S7.

At the step S38, the application program, corresponding to the changed state, stored (learned) in the storage portion 52 is started. In other words, a gadget is started in a case where it is stored in the storage portion 52 that the gadget has been first used for at least the constant time at the time of a precedent stood state (see Fig. 5), while a media player is started in a case where it is stored in the storage portion 52 that the media player has been first used for at least the constant time at the time of a precedent laid-down state (see Fig. 6). In a case where it is stored in the storage portion 52 that an application capable of playing back a streaming video has been first used for at least the constant time at the time of a precedent hand-held state (see Figs. 3 and 4), the application capable of playing back a streaming video is started.

The learning flow for an application program causing the storage portion 52 to store an application program first used for at least the constant time in each use state (each of the stood state, the laid-down state and the hand-held state) of the portable information display terminal according to the second embodiment is now described with reference to Figs. 3 to 7 and 15.

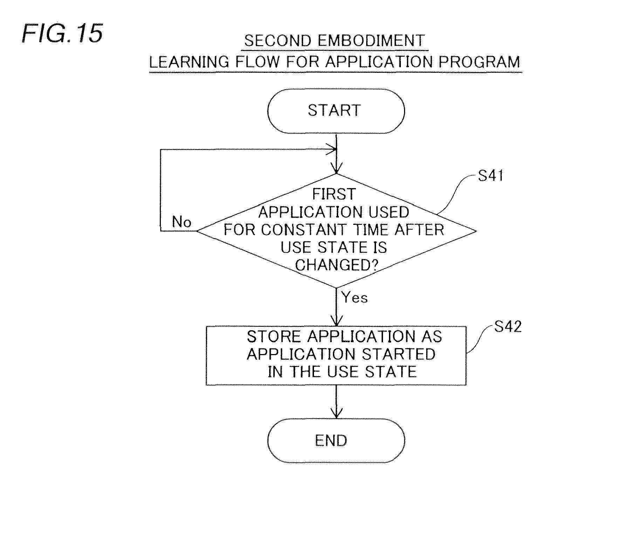

First, whether or not a currently used application program is a first application program used for at least the constant time after the use state has been changed is determined by the control portion 151 (see Fig. 7) at a step S41, as shown in Fig. 15. In a case where it is determined at the step S41 that the currently used application program is not the first application program used for at least the constant time after the use state has been changed, the determination at the step S41 is repeated. In a case where it is determined at the step S41 that the currently used application program is the first application program used for at least the constant time after the use state has been changed, the control portion 151 advances to a step S42.

At the step S42, the currently used application program is stored (learned) in the storage portion 52 by the control portion 151 as an application program started when the portable information display terminal is changed to the same state as the current state next time, and the learning flow causing the storage portion 52 to store the application program first used for at least the constant time in each use state (each of the stood state (see Fig. 5), the laid-down state (see Fig. 6) and the hand-held state (see Figs. 3 and 4)) of the portable information display terminal terminates.

According to the second embodiment, as hereinabove described, the control portion 151 decides and starts the application program corresponding to the use state on the basis of the use history stored in the storage portion 52 so that the same can cause the storage portion 52 to store the application program so frequently used by the user that the same is first used for at least the constant time after the state is changed and start the same, whereby convenience for the user can be improved.

According to the second embodiment, as hereinabove described, the control portion 151 starts the application program used for at least the prescribed time in a case where the portable information, display terminal is changed to a state after the use state is changed from a state before the use state is changed so that the same can easily grasp an application program, having been started in the past, highly frequently used by the user, whereby the control portion 151 can easily start the application program highly frequently used by the user also after the use state is changed.

### (Third Embodiment)

A portable information display terminal according to a third embodiment of the present invention is now described with reference to Figs. 3 to 7. In this third embodiment, an example of automatically starting an application program correspondingly to transition of use state change of the portable information display terminal is described, dissimilarly to the aforementioned first and second embodiments automatically starting the application programs correspondingly to the use states of the portable information display terminals.

According to the third embodiment, a control portion 251 (see Fig. 7) is formed to determine and specify use states (see Figs. 3 to 6) of a frame 20 and a liquid crystal display portion 10 on the basis of a detection result by an inclination sensor 53. Further, the control portion 251 has a function of recognizing and deciding a transition mode of state change from a previously specified use state to the use state specified this time. The control portion 251 is formed to be capable of automatically starting an application program corresponding to the transition mode of the detected use state. For example, the control portion 251 is formed to start a prescribed application program in a case of recognizing and deciding such a transition mode that the use state has been changed from a stood state (see Fig. 5) to a laid-down state (see Fig. 6). Further, the control portion 151 is formed to be capable of starting an application program different from the prescribed application program in a case of recognizing and deciding such a transition mode that the use state has been changed from a hand-held state (see Figs. 3 and 4) to the laid-down state (see Fig. 6), for example. In other words, the control portion 251 is formed, in a case where states before being changed are different from each other even if states after being changed are identical states, to be capable of starting different application programs since transition modes of the states are different from each other. The control portion 251 is capable of deciding one transition mode from among six transition modes between the stood state, the laid-down state and the hand-held state.

A starting and maintenance flow for an application program corresponding to a use state of the portable information display terminal according to the third embodiment is now described with reference to Figs. 3 to 7 and 16. In this flow according to the third embodiment, a step S1 to a step S5 are identical to those in the starting and maintenance flows for the application programs corresponding to the use states of the portable information display terminals according to the aforementioned first and second embodiments. A portion of processing different from the starting and maintenance flows for the application programs corresponding to the use states of the portable information display terminals according to the first and second embodiments is now described.

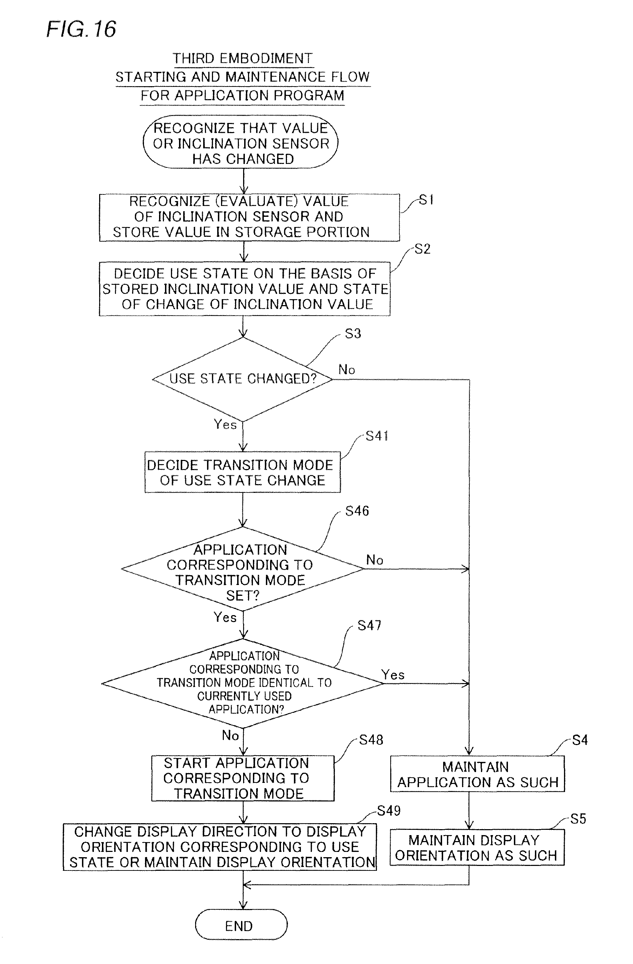

In a case where it is determined at the step S3 by the control portion 251 (see Fig. 7) that a decided state has been changed from a state (before event occurrence) before an inclination value detected by the inclination sensor 53 changes, the control portion 251 advances to a step S41, as shown in Fig. 16. A transition mode of state change is decided on the basis of a use state before the use state is changed and such a use state that the use state is changed at the step S41, and the control portion 251 advances to a step S46. At the step S46, whether or not an application program corresponding to the transition mode is set is determined by the control portion 251. In other words, whether or not an application program automatically started with respect to each of the six transition modes between the stood state (see Fig. 5), the laid-down state (see Fig. 6) and the hand-held state (see Figs. 3 and 4) is set by the user is determined at the step S46. In a case where it is determined at the step S46 that the application program corresponding to each transition mode is not set, the control portion 251 advances to the step S4 and the step S5, and the starting and maintenance flow for the application program terminates. In a case where it is determined at the step S46 that the application program corresponding to the transition is set, the control portion 251 advances to a step S47.

At the step S47, whether or not an application program having been set is the same application program as a currently used application program is determined by the control portion 251. In a case where it is determined at the step S47 that the application program having been set is the same application program as the currently used application program, the application program may not be changed, and hence the control portion 251 advances to the step S4 and the step S5, and the starting and maintenance flow for the application program terminates. In a case where it is determined at the step S47 that the application program having been set is not the same application program as the currently used application program, the control portion 251 advances to a step S48.

Thereafter the application program, corresponding to the transition mode, set by the user is started at the step S48, and the control portion 251 advances to a step S49. A display direction is changed to a display orientation corresponding to the current state or the display orientation is maintained at the set S49, and the starting and maintenance flow for the application program terminates.

According to the third embodiments, as hereinabove described, the control portion 251 starts the application program corresponding to the use state specified on the basis of the detection result by the inclination sensor 53 and also corresponding to the transition mode at the time when the portable information display terminal makes a transition from a use state before the specified use state to the specified use state so that the same can start the application program in consideration of not only the current use state but also the transition mode from the immediately precedent use state to the current use state, whereby the control portion 251 can start an application program more suitable to a use situation in consideration of difference between use situations of the user resulting from difference between transition modes.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are included.

For example, while the example of employing the inclination sensor as an example of the use state detection means for the portable information display terminal according to the present invention has been shown in each of the aforementioned first to third embodiments, the present invention is not restricted to this. A detection means other than the inclination sensor may be employed so far as the same is a detection means capable of detecting three states, i.e. two use states (a stood state and a laid-down state) where the portable information display terminal is placed on a placing surface and a use state where the user manually grasps the portable information display terminal.

While such an example that the inclination sensor detects only any of the stood state where the user uses the portable information display terminal while standing the frame and the liquid crystal display portion on the placing surface, the laid-down state where the user uses the portable information display terminal while laying down the frame and the liquid crystal display portion on the placing surface and the hand-held state where the user uses the portable information display terminal while manually grasping the frame has been shown in each of the aforementioned first to third embodiments, the present invention is not restricted to this. For example, the inclination sensor may detect a use state other than the stood state, the laid-down state and the hand-held state such as a state of holding the portable information display terminal while hanging the same on a wall surface, in addition to the stood state, the laid-down state and the hand-held state.

While such an example that the inclination sensor forms the frame in the outer shape placeable in the stood state where the user uses the portable information display terminal while standing the frame and the liquid crystal display portion on the placing surface and the laid-down state where the user uses the portable information display terminal while laying down the frame and the liquid crystal display portion on the placing surface has been shown in each of the aforementioned first to third embodiments, the present invention is not restricted to this. A stand or the like of a separate member may be so mounted on the frame (housing) that the inclination sensor places the frame in the stood state where the user uses the portable information display terminal while standing the frame and the liquid crystal display portion on the placing surface and the laid-down state where the user uses the portable information display terminal while laying down the frame and the liquid crystal display portion on the placing surface.

While the example of remote-controlling a control object apparatus by emitting infrared rays including remote control signals to the control object apparatus in the remote control mode has been shown in each of the aforementioned first to third embodiments, the present invention is not restricted to this. For example, the control object apparatus may be remote-controlled by employing a radio communication standard such as Bluetooth (registered trademark) or Zigbee (registered trademark).

While processing operations of the control portion have been described by employing the flow charts described in an event-driven manner in starting and described in a flow-driven manner as to processing operations after the starting for the convenience of illustration in each of the aforementioned first to third embodiments, the present invention is not restricted to this. The processing operations may be performed in a complete event-driven manner, in a complete flow-driven manner, or in a parallel processing manner.

While each of the aforementioned first and third embodiments has been formed to maintain the current application program as such in a case where there is no set applicant program and the second embodiment maintains the current application program as such in a case where there is no learned applicant program, the present invention is not restricted to this. A default application program corresponding to a use state may be started in a case where setting or learning of a started application program is not performed.

While such an example that the control portion causes the storage portion to store (learn) the application program first used for at least the constant time in a certain use state and starts the application program previously stored in the storage portion in a case where the portable information display terminal is subsequently switched to the use state from another use state has been shown in the aforementioned second embodiment, the present invention is not restricted to this. For example, the control portion may cause the storage portion to store (learn) an application program finally used in a certain use state and start an application program previously stored in the storage portion in a case where the portable information display terminal is subsequently switched to the use state from another use state. Further, the control portion may cause the storage portion to store (learn) an application program exhibiting the maximum frequency among application programs used in a certain use state and start the application program stored in the storage portion in a case where the portable information display terminal is subsequently switched to the use state from another use state.

## Claims

1. A portable information display terminal (1) comprising:
a housing (20);
a use state detection means (53) for detecting which use state the portable information terminal is in, i.e. in a first use state where the user uses the portable information display terminal while placing said housing on a placing surface (100) or in a second use state where the user uses the portable information display terminal while manually grasping said housing; and
a control portion (51, 151, 251) determining and specifying the use state on the basis of a detection result of said use state detection means and starting an application program corresponding to specified said use state.

2. The portable information display terminal according to claim 1, further comprising a display portion (10) displaying information, wherein
the second use state where the user uses the portable information display terminal while manually grasping said housing includes a laterally oriented use state and a vertically oriented use state,
said use state detection means is formed to be also capable of detecting lateral orientation and vertical orientation in addition to said use state, and
said control portion is formed to start an application program corresponding to said second use state and to change the orientation of display to be displayed on said display portion in response to the lateral orientation or the vertical orientation in a case of specifying that the portable information terminal is in said second use state.

3. The portable information display terminal, according to claim 1, further comprising a display portion displaying information, wherein
said first state where the user uses the portable information display terminal while placing said housing on the placing surface includes a vertically placed use state where the user uses the portable information display terminal while standing said housing on the placing surface and a laid-down use state where the user uses the portable information display terminal while laying down said housing on the placing surface, and
said control portion is formed to start an application program corresponding to said first use state and to change the orientation of display to be displayed on said display portion in response to said vertically placed use state or said laid-down use state in a case of specifying that the portable information display terminal is in said first use state.

4. The portable information display terminal according to claim 1, so formed that the user is capable of setting an application program started in response to said use state, wherein
said control portion is formed to start said application program set by the user in response to said use state.

5. The portable information display terminal according to claim 1, wherein
said control portion is formed to terminate an application program having been started in a use state before said specified use state and to start the application program corresponding to said specified said use state when starting the application program corresponding to said specified said use state.

6. The portable information display terminal according to claim 1, wherein
said first use state where the user uses the portable information display terminal while placing said housing on the placing surface includes a vertically placed use state where the user uses the portable information display terminal while standing said housing on the placing surface and a laid-down use state where the user uses the portable information display terminal while laying down said housing on the placing surface, and
said control portion is formed to start an application program not premised to be operated by the user in the case of said vertically placed use state and to start an application program premised to be operated by the user in the case of said laid-down use state.

7. The portable information display terminal according to claim 6, further comprising a communication portion (31, 32) used in a remote control mode, wherein
said control portion is formed to start an application program corresponding to said remote control mode in which a remote control signal is transmittable from said communication portion in a case of specifying that the portable information display terminal is in said laid-down use state on the basis of the detection result by said use state detection means.

8. The portable information display terminal according to claim 6, further comprising a display portion displaying information, wherein
said application program not premised to be operated by the user includes an application program so formed that the information displayed on said display portion is browsable in a state where said user does not operate the portable information display terminal.

9. The portable information display terminal according to claim 6, wherein
said control portion is formed to start the application program premised to be operated by the user also in a case of specifying that the portable information display terminal is in said second use state in addition to the case of said laid-down use state.

10. The portable information display terminal according to claim 6, wherein
said use state detection means is formed to acquire inclinations of said housing in said vertically placed use state and said laid-down use state in said first use state, and
said control portion is formed to be capable of determining and specifying said vertically placed use state and said laid-down use state on the basis of the inclinations of said housing in said vertically placed use state and said laid-down use state acquired by said use state detection means.

11. The portable information display terminal according to claim 10, wherein
said housing has such an outer shape that said housing is placeable with different inclinations in said vertically placed use state and said laid-down use state, and
said control portion is formed to be capable of determining and specifying said vertically placed use state and said laid-down use state on the basis of the different inclinations of said housing in said vertically placed use state and said laid-down used state based on the outer shape of said housing acquired by said use state detection means.

12. The portable information display terminal according to claim 11, wherein
said housing is so formed that the inclination of said housing in said vertically placed use state and the inclination of said housing in said laid-down used state are relatively different from each other by at least 90 degrees, and
said control portion is formed to be capable of determining and specifying said vertically placed use state and said laid-down use state on the basis of said inclinations of said housing different from each other by at least 90 degrees in said vertically placed use state and said laid-down used state based on the outer shape of said housing acquired by said use state detection means.

13. The portable information display terminal according to claim 1, wherein
said first use state where the user uses the portable information display terminal while placing said housing on the placing surface includes a vertically placed use state where the user uses the portable information display terminal while standing said housing on the placing surface and a laid-down used state where the user uses the portable information display terminal while laying down said housing on the placing surface, said use state detection means includes an inclination sensor (53), and
said control portion is formed to determine and specify said vertically placed use state and said laid-down use state in said first use state on the basis of an inclination angle detected by said inclination sensor and to determine and specify said second use state where the user uses the portable information display terminal while manually grasping said housing on the basis of a changing state of an inclination value detected by said inclination sensor.

14. The portable information display terminal according to claim 13, further comprising a storage portion (52) storing the inclination angle detected by said inclination sensor, wherein
said control portion is formed to determine and specify said vertically placed use state and said laid-down use state in said first use state and to determine and specify said second use state where the user uses the portable information display terminal while manually grasping said housing by comparing an inclination angle before a use state stored in said storage portion is changed and an inclination angle after the use state stored in said storage portion is changed with each other.

15. The portable information display terminal according to claim 13, wherein
said control portion is formed to determine and specify said second use state where the user uses the portable information display terminal while manually grasping said housing in a case where said inclination angle detected by said inclination sensor changes with time in a prescribed range and to determine and specify said first use state where the user uses the portable information display terminal while placing said housing on the placing surface in a case where said inclination angle detected by said inclination sensor does not change with time in said prescribed range.

16. The portable information display terminal according to claim 1, so formed that the user is capable of setting validation or invalidation of a function of starting the application program corresponding to detected said use state, wherein
said control portion is formed to start the application program corresponding to detected said use state in a case where the function of starting the application program corresponding to said use state is valid.

17. The portable information display terminal according to claim 16, wherein
said control portion is formed not to terminate but to maintain an application program having been started in a state before said use state is changed in a case where the function of starting the application program corresponding to said use state is invalid, also in a case where the portable information display terminal is switched from the state before the use state is changed to the state after said used state is changed.

18. The portable information display terminal according to claim 1, further comprising a storage portion storing a use history of an application program used in at least one use state of said first use state and said second use state, wherein
said control portion is formed to decide and start the application program corresponding to the detected use state on the basis of said use history stored in said storage portion.

19. The portable information display terminal according to claim 18, wherein
application programs used for at least a prescribed time in the respective use states of said first use state and said second use state are included in said use history, and
said control portion is formed to start an application program used for at least said prescribed time in a case where the portable information display terminal is switched from a state before the use state is changed to a state after said used state is changed.

20. The portable information display terminal according to claim 1, wherein
said control portion is formed to start an application program corresponding to the use state specified on the basis of the detection result by said use state detection means and also corresponding to a transition mode at a time of making a transition from the use state before said specified use state to said specified use state.
